# EUROPÄISCHE PATENTSCHRIFT

(11) **EP 2 040 563 B1**
(45) Veröffentlichungstag und Bekanntmachung des Hinweises auf die Patenterteilung: **27.09.2017**
(21) Anmeldenummer: 07785526.0
(22) Anmeldetag: 12.06.2007
(51) Int. Cl.: A23J 3/28, A23J 1/14, A23L 33/185, A23J 3/14

(54) **HOCHKONZENTRIERTES PFLANZLICHES PROTEINPRÄPARAT UND VERFAHREN ZUR HERSTELLUNG DESSELBEN**
HIGHLY CONCENTRATED PLANT PROTEIN PREPARATION AND METHOD FOR PRODUCING THE SAME
PRÉPARATION PROTÉIQUE VÉGÉTALE TRÈS CONCENTRÉE ET PROCÉDÉ POUR SA PRODUCTION

(30) Priorität: 30.06.2006 DE 102006030243
(43) Veröffentlichungstag der Anmeldung: 01.04.2009
(73) Patentinhaber: Fraunhofer-Gesellschaft zur Förderung der angewandten Forschung e.V., 80686 München (DE)
(72) Erfinder: ZACHERL, Christian, 85354 Freising (DE); EISNER, Peter, 85354 Freising (DE); PICKARDT, Claudia, 85354 Freising (DE); HASENKOPF, Katrin, 85354 Freising (DE)
(74) Vertreter: Gagel, Roland
(86) Internationale Anmeldenummer: PCT/DE2007/001025
(87) Internationale Veröffentlichungsnummer: WO 2008/000213

(56) Entgegenhaltungen:
- WO-A-02/060273
- WO-A-02/089597
- DD-A1- 271 261
- US-A- 4 169 090
- US-A- 6 005 076
- US-A1- 2004 197 378
- MURRAY D: "ISOLATING PROTEIN FROM CANOLA" OILS AND FATS INTERNATIONAL, INTERNATIONAL TRADE PUBLICATIONS, REDHILL,, GB, Bd. 17, Nr. 3, Mai 2001 (2001-05), Seiten 19-21, XP001074200 ISSN: 0267-8853
- MOURE ET AL: "Functionality of oilseed protein products: A review" FOOD RESEARCH INTERNATIONAL, ELSEVIER APPLIED SCIENCE, BARKING, GB, Bd. 39, Nr. 9, 1. November 2006 (2006-11-01), Seiten 945-963, XP005658096 ISSN: 0963-9969

## Beschreibung

### Technisches Anwendungsgebiet

Die Erfindung betrifft ein Präparat zur hochkonzentrierten Anreicherung von Lebensmitteln mit Pflanzenprotein sowie die Beschreibung des Einsatzes des Präparates in Lebensmitteln.

### Stand der Technik

Der Einsatz von pflanzlichen Proteinen in Lebensmitteln gewinnt zunehmend an Bedeutung. Neben ihrer guten Ökoeffizienz und ihren niedrigen Herstellungskosten zeichnet sich eine Reihe von Pflanzenproteinen durch eine gesundheitsfördernde Wirkung aus. Beispielsweise ist die Cholesterin senkende Wirkung von Sojaprotein oder die Blutzucker regulierende Wirkung von Lupinenprotein bereits in vielen Veröffentlichungen beschrieben. Seitens der FDA (Food and Drug Administration) besitzt Sojaprotein einen Health Claim, der besagt, dass die Aufnahme von mindestens 25 g Sojaprotein pro Tag das Risiko, an kardiovaskulären Krankheiten zu erkranken, signifikant reduziert. Es gibt neue Studien, nach denen auch Lupinenprotein den Cholesterinspiegel senkt. Zur effektiven Senkung des Cholesterinspiegels müssen in der Nahrung ausreichende Mengen biofunktionelle, d.h. Körperfunktionen beeinflussende und somit gesundheitsfördernde, Proteine vorhanden sein. Diese müssen den Lebensmitteln zugesetzt werden, um die erforderliche Dosis mit der täglichen Nahrung aufnehmen zu können. Dies ist jedoch schwierig, ohne dabei die sensorische Qualität der Lebensmittel zu beeinträchtigen.

Handelsübliche Pflanzenproteinpräparate besitzen gute Emulgier- und Schaumbildeeigenschaften, eine hohe Wasserbindekapazität und eine hohe Gelfestigkeit. Aufgrund der hohen Viskosität der Proteinlösungen können nur maximal 5% an Sojaprotein in einen Drink eingearbeitet werden, der sensorisch noch akzeptiert wird. Zur Erreichung des bioaktiven Effektes von 25 g Protein müssten dann mindestens 0,5 Liter des Proteindrinks getrunken werden, was von Verbrauchern oft abgelehnt wird.

Die ausgeprägte Wasserbindung der Pflanzenproteine bewirkt, dass Lebensmittel, in die Pflanzenproteine in größeren Mengen eingearbeitet werden, sehr fest, trocken und spröde wirken. Die Proteine binden das Wasser in den Lebensmitteln, führen durch den hohen Speichelverbrauch im Mund zu einem unangenehm trockenen Mundgefühl und sind schwer zu kauen. Daher ist es schwierig, sensorisch ansprechende Lebensmittel mit einem cremigen Mundgefühl und einem hohen Proteingehalt herzustellen.

Außerdem gibt es Bevölkerungsgruppen, die Schwierigkeiten haben, genug Proteine aufzunehmen. Personen mit Schluckbeschwerden oder Kauschwierigkeiten und ältere Menschen im Allgemeinen nehmen oftmals nicht genug Nährstoffe auf, was nicht selten zu Mangelernährung führt. Die bekanntermaßen häufig in diesem Personenkreis auftretende Unterversorgung mit Proteinen liegt oftmals an einem geringen Angebot an proteinreichen Produkten, die leicht zu kauen und/oder zu schlucken sind und gut schmecken. Proteinpräparate, die in hohen Konzentrationen leicht zu schlucken sind und damit zur Proteinanreicherung von Lebensmitteln für die genannten Personengruppen verwendet werden können, sind bislang nicht bekannt.

Darüber hinaus zeigen viele pflanzliche Proteinpräparate einen unangenehmen Beigeschmack, da sie sekundäre Pflanzenstoffe wie z.B. phenolische Verbindungen oder Bitterstoffe enthalten. Auch die Verbesserung dieses Sachverhalts sollte berücksichtigt werden, wenn ein Präparat mit guten sensorischen Eigenschaften bereitgestellt werden soll.

Aus US 4 169 090 ist die Herstellung eines Proteinmizellen aufweisenden Proteinisolates mit einem Proteingehalt von mehr als 90% Gew.-% bezogen auf die Trockenmasse bekannt.

Aufgabe der vorliegenden Erfindung ist es, Pflanzenproteinpräparate bereit zu stellen, mit denen es ermöglicht wird, große Mengen an Pflanzenproteinen in Lebensmittel einzuarbeiten, ohne die sensorischen, techno-funktionellen oder haptischen Eigenschaften negativ zu beeinflussen.

### Darstellung der Erfindung

Die Aufgabe wird durch ein Proteinpräparat gemäß Anspruch 1 gelöst. Vorteilhafte Ausgestaltungen des Präparates können den Unteransprüchen sowie der nachfolgenden Beschreibung entnommen werden.

Das erfindungsgemäße Präparat besteht aus Proteinpartikeln, wobei ein Proteinpartikel aus mehreren pflanzlichen Proteinmolekülen mit jeweils mindestens einem hydrophilen und mindestens einem hydrophoben Teil besteht. Die Proteinmoleküle sind derart aneinander gelagert, dass das Proteinpartikel eine hydrophobe Oberfläche aufweist. Der Proteingehalt der Proteinpartikel beträgt > 75 Gew.-%, vorzugsweise > 85 Gew.-% der Trockenmasse. Das Proteinpräparat enthält Öl und weist einen Trockensubstanzgehalt von über 30 Gew.-% auf. Der Ölgehalt im Präparat, bezogen auf den Trockensubstanzgehalt, übersteigt Werte von 1 Gew.-%.

Vorteilhaft sind die Proteinmoleküle derart aneinander gelagert, dass das Proteinpartikel eine rundliche, insbesondere eine kugelige oder sphärische Gestalt aufweist.

Besonders vorteilhaft sind die Proteinmoleküle des Proteinpartikels derart in Form einer Kugel aneinander gelagert, dass die hydrophilen Teile der Proteinmoleküle in das Kugelinnere und die hydrophoben Teile der Proteinmoleküle in die Außenseite ragen. In dieser Form sind die Proteine nicht wasserlöslich und weisen keine ausgeprägten techno-funktionellen Eigenschaften mehr auf. Als Emulgator oder Schaumbildner für Lebensmittelanwendungen sind sie in dieser Form nicht nutzbar.

Die Partikel können so stabil ausgeführt werden, dass ihre kugelige Gestalt auch durch Homogenisieren bei 10⁸ Pa(1000 bar) nicht zerstört wird. Diese stabile Anordnung kann mit Proteinen aus verschiedenen pflanzlichen Rohstoffen erreicht werden.

Die Partikel im erfindungsgemäßen Präparat sind in Wasser im neutralen Bereich (pH-Wert zwischen 6,5 und 7,5) bei 20°C nicht löslich und haben eine mittlere Partikelgröße von < 50 µm, vorteilhaft < 10 µm.

Überraschenderweise kann mit dem beschriebenen Präparat aus einer wässrigen Suspension des Präparates mit einem Trockensubstanzgehalt von 5 Gew.-% nur durch mechanische Trennschritte wie Pressen oder Zentrifugieren ein Trockensubstanzgehalt von über 30 Gew.-%, besonders vorteilhaft über 35 Gew.-% eingestellt werden. Im Gegensatz dazu können wasserlösliche Proteinpräparate nach dem Stand der Technik mit den genannten Verfahren maximal auf Proteingehalte von 20 Gew.-% aufkonzentriert werden.

Durch die genannte Struktur mit der außen liegenden hydrophoben Schicht bindet das Pflanzenprotein kaum Wasser, weshalb für den Verzehr und für das Schlucken der mechanisch entwässerten Proteinmasse, auch bei Proteingehalten von über 35 Gew.-%, kaum Speichel benötigt wird. Es entsteht ein weiches, cremiges Mundgefühl, so dass der Verzehr des mechanisch entwässerten, feuchten Präparates als angenehm empfunden wird. Auch Menschen mit Schluckbeschwerden können mit diesem Proteinpräparat angereicherte Lebensmittel verzehren.

Ein besonders weiches Mundgefühl stellt sich ein, wenn der Ölgehalt im Präparat, bezogen auf den Trockensubstanzgehalt, besonders vorteilhaft Werte von 5 Gew.-% übersteigt, aber kleiner als 20 Gew.-% ist (Bestimmungsmethode nach Caviezel, AOAC^{®} PEER_VERIFIED METHOD PVM 4:1997). Das Öl lagert sich in derartigen ölhaltigen Präparaten an die Partikeloberflächen mit einer dünnen Schicht an, so dass die Partikel noch weniger Wasser binden können. Die dünne Ölschicht hat außerdem den Vorteil, dass sie als Trennmittel zwischen den Proteinpartikeln fungiert und deren Mobilität somit erhöht. Das Mundgefühl wird besonders weich und angenehm cremig. Der Ölüberzug der Partikel besteht vorzugsweise aus wertvollen Pflanzenölen mit einem Gehalt an ungesättigten Fettsäuren > 30 Gew.-% im Öl. Dabei ist die Verwendung von Protein und Öl aus derselben Pflanzengattung besonders effizient zur Reduktion der Wasserbindung des Präparates.

Präparate mit dem beschriebenen Ölgehalt ermöglichen es zudem, lipophile Bestandteile in das Präparat einzubringen, wie zum Beispiel Beta-Karotin, Aromastoffe oder biofunktionelle Substanzen, was zu einem kombinierten biofunktionellen Lebensmittel führt.

Das erfindungsgemäße Präparat wird in Lebensmittel vorzugsweise als feuchte Masse oder Suspension mit einem Wassergehalt von 50 bis 80 Gew.-% eingearbeitet, was ein Suspendieren der Partikel in Wasser während der Herstellung von Lebensmitteln überflüssig macht und damit Kosten spart.

Aus dem erfindungsgemäßen Präparat können weitere neuartige Präparate hergestellt werden. Ein nicht erfindungsgemäßes, besonders weiches und cremiges Präparat wird erhalten, wenn das wasserhaltige Proteinpräparat mit mehr als 20 Gew.-% Öl, besonders vorteilhaft mit mehr als 40 Gew.-%, vermischt wird und das im Präparat enthaltene Wasser nachfolgend (z.B. in einem Trockner, Zentrifuge), abgetrennt wird. Hierdurch gelingt es, das im feuchten Präparat enthaltene Wasser weitgehend durch Öl zu ersetzen. Das dann vorwiegend aus Öl und Protein bestehende Präparat kann in Lebensmittel eingearbeitet werden, die kein oder nur wenig Wasser enthalten, d.h. deren Restwassergehalt unter 10%, vorzugsweise unter 5% liegt. Beispiele für derartige Lebensmittel sind Schokolade, Schokoladefüllungen, diverse wasserfreie herzhafte oder süße Brotaufstriche, wie z.B. Nuss-Nougatcreme, sowie Backwaren und Konditoreierzeugnisse.

Als pflanzliche Rohstoffe können Leguminosen oder Ölsaaten zum Einsatz kommen. Besonders vorteilhaft ist der Einsatz von Sonnenblumen-, Soja-, Ackerbohnen-, Erbsen- oder Lupinensamen. Besonders bei Einsatz von Lupine, und hier im Besonderen von Lupinus angustifolius, können mit dem Präparat hochwirksame biofunktionelle Lebensmittel, zum Beispiel zur Cholesterinsenkung, hergestellt werden. Ein Präparat aus Sonnenblumenkernen hat den Vorteil, dass das Protein nach derzeitigem Kenntnisstand keine allergischen Reaktionen beim Menschen auslöst und somit auch von Menschen mit Nuss- oder Lupinenallergie verzehrt werden kann.

Mit den Präparaten sollen proteinreiche Lebensmittel hergestellt werden können, die schmecken, nicht trocken, fest, hart oder bröckelig wirken, keinen hohen Speichelverbrauch verursachen und leicht zu schlucken sind. Im Besonderen sollten die Pflanzenproteinpräparate derart beschaffen sein, dass vor allem ältere Menschen und Menschen mit Schluckbeschwerden oder Kauproblemen in der Lage sind, das proteinreiche Lebensmittel problemlos zu verzehren und somit ausreichende Mengen an Protein aufzunehmen. Außerdem könnten mit einem derartigen Präparat biofunktionelle Lebensmittel hergestellt werden mit einem zur Erzielung des gewünschten Effekts ausreichend hohen Gehalt an wirksamen Proteinen.

Die Proteinpräparate können nicht nur zur hochkonzentrierten Anreicherung von Lebensmitteln mit Proteinen eingesetzt werden, sondern auch um die rheologischen Eigenschaften in Lebensmitteln zu verändern, den Kraftaufwand beim Kauen zu reduzieren und die Gleitreibung auf der Zunge und am Gaumen zu senken. Die Lebensmittel erhalten durch Zusatz dieses Präparates ein weicheres Mundgefühl, was den Genusswert erhöht.

Nachfolgend sind einige Lebensmittelanwendungen beschrieben, die durch Zugabe des erfindungsgemäßen Präparates in die Rezeptur hergestellt werden können. Daneben sind auch weitere Anwendungen denkbar, in denen das Präparat zum Einsatz kommen kann.
- Brotaufstriche (süß oder pikant)
- Feinkostsalate
- Streichwurstwaren (Leberwurst, Teewurst, Mettwurst)
- Frischkäse und Schmelzkäse
- Schokolade und Schokoladenfüllungen
- Süßspeisen, Cremes, Torten
- Getränke
- Soßen
- Diätetische Lebensmittel
- Eiskrem

Bei wasserhaltigen Lebensmitteln kann das Präparat als Suspension in Wasser mit einem Wassergehalt von 50 bis 80 Gew.-% eingesetzt werden. Bisher wurden sowohl Präparate mit einem Ölgehalt unter 3%, als auch Produkte mit Ölgehalten zwischen 7 und 13% Öl eingesetzt. Selbstverständlich sind auch Präparate mit anderen Ölgehalten herstellbar.

Das nachfolgend beschriebene Verfahren sowie dessen vorteilhafte bzw. bevorzugte Varianten zur Herstellung eines Präparates sind nicht von der Erfindung umfasst.

Bei dem Verfahren zur Herstellung des Präparates aus pflanzlichen Proteinen werden pflanzliche Proteine, die jeweils mindestens einen hydrophoben und mindestens einen hydrophilen Teil aufweisen, in einem Lösemittel mit einer ersten Ionenstärke und einer ersten Temperatur, gegebenenfalls unter Rühren, gelöst oder suspendiert, wodurch eine Lösung oder Suspension erhalten wird. Durch eine gleichzeitige und in einer kurzen Zeit(0,1 bis 5 Sekunden) erfolgende Absenkung der ersten Ionenkonzentration und der ersten Temperatur (Milieuänderung von warm nach kalt und von salzreich nach salzarm) erfolgt eine spontane Änderung der Tertiärstruktur (Umfaltung/Umstülpung der Proteine) und eine Anlagerung der Proteine aneinander. Die sich dabei aus den einzelnen (umgefalteten/umgestülpten) Proteinen bildenden Proteinpartikel weisen eine überwiegend hydrophobe Oberfläche auf. Die Proteinpartikel fallen aus der Lösung aus.

Im Vergleich zu dem beschriebenen Verfahren werden nach Stand der Technik Proteinpartikel mit thermischen oder chemischen Fällungsverfahren (z.B. durch Säure) gewonnen. Hierbei erfolgt eine partielle Gelbildung oder Agglomeratbildung der Proteine über Disulfidbrücken und es kommt zur Ausbildung von wasserunlöslichen Partikeln. Allerdings ist die Anordnung der Proteine in diesen Partikeln jedoch zufällig und es treten sehr unterschiedliche Partikelgrößen auf. Insbesondere ergeben sich keine kugelförmigen Partikel mit hydrophober Oberfläche.

Das zur Herstellung des Präparates zum Einsatz kommende Lösemittel ist vorzugsweise wässrig, kann aber auch einen alkoholischen Anteil haben.

In einem bevorzugten Verfahren werden die erste Ionenstärke und die erste Temperatur des Lösemittels dadurch gesenkt, dass die Lösung oder Suspension, bestehend aus dem Lösemittel und den Proteinen, in ein zweites Lösemittel mit einer zweiten Temperatur und einer zweiten Ionenstärke gemischt wird. Vorzugsweise wird die Proteinlösung/-suspension in das zweite Lösemittel eingedüst. Alternativ kann auch eine kontinuierliche Fällung durch Mischung der Lösung oder Suspension mit dem zweiten Lösemittel in einer Mischstrecke erfolgen.

In einer besonders bevorzugten Ausführungsform des Verfahrens liegt die erste Temperatur zwischen 25°C und 40°C und wird auf unter 10°C abgesenkt. Die Absenkung wird beispielsweise durch Eindüsung der Lösung oder Suspension in das zweite Lösemittel, das eine Temperatur von < 4°C hat, bewirkt.

In einer weiteren bevorzugten Ausführungsform entspricht die erste Ionenstärke des Lösemittels der Ionenstärke einer Natriumchloridlösung mit einem Salzgehalt von 1 bis 4 Gew.-%, vorzugsweise 2 Gew.-%. Diese Ionenstärke wird bevorzugt um einen Faktor 2 bis 50, besonders vorteilhaft um einen Faktor 3 bis 10, reduziert.

Vorzugsweise wird die Proteinlösung bzw. Proteinsuspension mit dem zweiten Lösemittel im Mischungsverhältnis 1:3 bis 1:12 gemischt.

Die gleichzeitige und in einer kurzen Zeit erfolgende spontane Absenkung der Ionenstärke und der Temperatur in der Lösung oder Suspension stellt ein wesentliches Merkmal des Verfahrens dar. Neben dem beschriebenen Verfahren sind auch weitere technische Methoden zur Herstellung des Präparates denkbar. Eine schnelle(innerhalb von 0,1-10 Sekunden erfolgende) Absenkung der Ionenkonzentration kann möglicherweise auch durch andere Methoden erreicht werden, beispielsweise durch elektrochemische Verfahren, Osmose/Ultrafiltration, Dialyse oder Zugabe von Chemikalien.

Eine schnelle Absenkung der Temperatur kann beispielsweise auch durch Zugabe von Eis bzw. Eis und Wasser oder durch Einleitung von flüssigem Stickstoff erreicht werden.

Bevorzugt werden die Proteine zur Herstellung des erfindungsgemäßen Proteinpräparates abhängig vom Bearbeitungsgrad der Rohstoffe durch mehrere Verfahrensschritte gewonnen. Ausgehend von pflanzlichen Rohstoffen wie Samen oder Teilen aus Samen von Ölsaaten oder Leguminosen und einem Vorverarbeitungsgrad können folgende Schritte erforderlich sein bzw. durchgeführt werden:
- Zerkleinern der pflanzlichen Rohstoffe zum Beispiel zu Flakes oder Mehl.
- Vorextraktion in einem oder mehreren Schritten von unerwünschten wasserlöslichen Stoffen, z.B. Zucker oder Bitterstoffe, durch Suspension des zerkleinerten oder unzerkleinerten Rohstoffs in Wasser in einem Milieu schlechter Proteinlöslichkeit. Dieses kann beispielsweise durch einen pH-Wert < 6 und/oder durch eine niedrige Temperatur < 10°C eingestellt werden. Anschließend werden unerwünschte, wasserlösliche Bestandteile durch mechanische Abtrennverfahren abgetrennt. Die so gereinigten Rohstoffe können weiterverarbeitet werden.
- Suspendieren der zerkleinerten oder unzerkleinerten, gereinigten oder ungereinigten Rohstoffe in einem, vorzugsweise wässrigen, Extraktionsmittel und Extrahieren der Proteine. Hierbei gehen die Proteine in Lösung. Neben rein wässrigen Extraktionsmitteln sind auch Extraktionsmittel mit einem alkoholischen Anteil, beispielsweise zwischen 10 und 80 %, einsetzbar. Vorteilhafte Milieubedingungen weisen eine Temperatur > 10°C, besser > 20°C und ein Feststoff-Flüssigkeitsverhältnis (s:1) von 1:5 bis 1:20 auf.

- Gewinnung des proteinhaltigen Extrakts durch Entfernen unlöslicher Bestandteile wie Fasern. Dazu eignen sich mechanische Verfahren wie Zentrifugieren, Dekantieren, Separieren oder Filtrieren.

Der gewonnene Proteinextrakt kann direkt für die Herstellung des Proteinpräparates verwendet werden. Aber es ist auch möglich, die Proteine aus dem Extrakt zu isolieren, um dann mit den isolierten Proteinen eine neue Lösung oder Suspension zur Herstellung des Proteinpräparates anzusetzen. Möglich wäre hier beispielsweise eine Trocknung des Extrakts. Möglich ist auch eine Konzentrierung oder eine Verdünnung des Extrakts.

Die Größe der Proteinpartikel ist abhängig von der Proteinkonzentration im Extrakt bzw. in der Lösung/ Suspension, der Differenz zwischen erster und zweiter Temperatur und der Differenz der Ionenstärken der Lösung/Suspension. Insbesondere kann sie in einem bevorzugten Verfahren durch das Mischungsverhältnis Lösung/Suspension zu Fällmedium(zweites Lösemittel, z.B. kaltes, salzarmes Wasser) eingestellt werden. Der Proteingehalt des Extraktes wird durch Abwaschung von Zuckern, Abtrennung von Fasern, und evtl. Extraktion von Öl beeinflusst.

Im Anschluss an die Fällung der Proteinpartikel werden die Proteinpartikel von dem sie umgebenden Lösemittel durch ein mechanisches Abtrennverfahren getrennt. Vorteilhaft erfolgen noch ein Nachwaschen der Proteinpartikel und ein Abtrennen des Waschwassers.

Ein Proteinpräparat mit besonders angenehmem und/oder neutralem Geschmack wird erhalten, wenn die zur Herstellung der Proteinpartikel bereitgestellten Proteine einen möglichst geringen Anteil phenolischer Verbindungen aufweisen, da diese teilweise unangenehme oder hervortretende Geschmackseigenschaften haben. Dies kann durch entsprechende Wahl der Rohstoffe erfolgen oder aber durch die Anwendung eines zusätzlichen Verfahrens zur Phenolabreicherung.

Der Anteil extrahierter phenolischer Verbindungen in einem Proteinextrakt verringert sich, wenn statt Wasser ein salzhaltiges Extraktionsmittel verwendet wird. Darüber hinaus wird durch den Salzgehalt zusätzlich die Oxidation extrahierter Phenole unterdrückt. Nicht-oxidierte Phenole lagern sich nicht an die Proteine an und können beispielsweise durch mechanische Abtrennverfahren aus dem Extrakt entfernt werden. Eine weitere Unterdrückung der Oxidation extrahierter Phenole kann zusätzlich durch die Einstellung eines pH-Wertes < 8, im Extraktionsmittel erreicht werden.

Zunächst werden vorbereitende Schritte abhängig vom Vorverarbeitungsgrad der phenolhaltigen Rohstoffe durchgeführt, d.h. Lösung oder Suspension der zerkleinerten oder unzerkleinerten Rohstoffe und/oder Vorextraktion unerwünschter, wasserlöslicher Stoffe. Anschließend werden die Proteine in einem Extraktionsmittel extrahiert, wobei eine Ionenstärke im Extraktionsmittel eingestellt wird, die der einer Lösung mit einem Kochsalzgehalt von über 0,5 Gew.-%, besonders über 2 Gew.-% entspricht. Durch den Salzgehalt (charakterisiert durch die Ionenstärke) wird die Ko-Extraktion von phenolischen Verbindungen, d.h. das (unerwünschte) in Lösung gehen der phenolischen Verbindungen, im Vergleich zu einer salzfreien oder salzarmen Lösung reduziert. Mit einem Kochsalzgehalt von über 0,5 Gew.-%, besonders über 2 Gew.-%, kann eine Reduktion des Anteils der koextrahierten phenolischen Verbindungen um mehr als 20 % erreicht werden. Alternativ können andere Salze verwendet werden, wobei die Ionenstärke der Salzlösung dann mit der oben genannten Kochsalzlösung vergleichbar sein soll. Ein weiterer Vorteil, der sich durch die Verwendung eines Extraktionsmittels mit einem wie oben beschriebenen Salzgehalt ergibt, ist eine bereits feststellbare Verringerung der Oxidation der koextrahierten phenolischen Verbindungen im Vergleich zu einem salzfreien Extraktionsmittel. Darüber hinaus können Wechselwirkungen der Phenole mit den Proteinen, falls erforderlich, weiter unterdrückt werden, wenn die Temperatur im Extraktionsmittel unter 30°C, besser noch unter 20°C gehalten wird, wobei aber die Proteinextraktion mit abnehmender Temperatur schlechter wird.

Mittels mechanischer Verfahren, wie Zentrifugieren, Separieren, Dekantieren oder Filtrieren, werden unlösliche Bestandteile wie Fasern vom Extrakt entfernt. Der Extrakt enthält noch einen Anteil nichtoxidierter koextrahierter phenolischer Verbindungen. Diese können durch ein mechanisches Abtrennverfahren, insbesondere Ultrafiltration, von den größeren Proteinen abgetrennt werden, so dass ein phenolarmer Proteinextrakt erhalten wird.

Der gewonnene phenolarme Proteinextrakt kann direkt für die Herstellung des Proteinpräparates verwendet werden. Aber es ist auch möglich, die Proteine aus dem Extrakt zu isolieren, um dann mit den isolierten Proteinen eine neue Lösung oder Suspension zur Herstellung des Proteinpräparates anzusetzen. Möglich wäre hier beispielsweise eine Trocknung des Extrakts. Möglich ist auch eine Konzentrierung oder eine Verdünnung des Extrakts.

Durch Einstellung eines pH-Wertes < 8,5 im Extraktionsmittel kann die Oxidation dennoch in Lösung gegangener, phenolischer Verbindungen weiter unterdrückt werden. Die nicht oxidierten phenolischen Verbindungen lagern sich nicht an die Proteine an und können durch mechanische Abtrennverfahren vom Proteinextrakt abgetrennt werden. Der gewonnene Proteinextrakt weist dadurch einen noch niedrigeren Phenolgehalt auf.

Bei der Extraktion von Proteinen aus Sonnenblumensamen oder Fraktionen aus Sonnenblumensamen wird in einer besonders vorteilhaften Ausführungsform des Verfahrens eine erhöhte Salzkonzentration eingesetzt. Dazu wird dem verwendeten Wasser 3 bis 20 Gew.-% Natriumchlorid zugesetzt. Zusätzlich wird der pH-Wert, z.B. durch Zugabe einer Säure, auf einen Wert < 7,0, besser auf einen Wert < 6,3 abgesenkt. Dadurch kann die Oxidation von sekundären Pflanzenstoffen (insbesondere Phenolcarbonsäuren) unterdrückt und die Anlagerung dieser Pflanzenstoffe an die in Lösung befindlichen Proteine unterbunden werden. Wenn diese Stoffe nicht oxidiert werden, liegen sie im Extrakt frei gelöst vor und können von den größeren Proteinmolekülen mechanisch, z.B. durch Ultrafiltration abgetrennt werden.

In einer besonders vorteilhaften Anwendung des Verfahrens wird zur Extraktion des Proteins aus entölten Ölsamenmehlen als Extraktionslösungsmittel eine hochkonzentrierte Natriumchloridlösung > 0,5 mol/l, vorzugsweise > 1,5 mol/l, verwendet. Überraschenderweise zeigt sich bei der Proteinextraktion aus Sonnenblumenmehl mit einer solchen Salzlösung, dass hierbei die Ko-Extraktion von unerwünschten Begleitsubstanzen erheblich reduziert werden kann. Beispielsweise kann der Gehalt an mitextrahierten sensorisch unvorteilhaften sekundären Pflanzenstoffen (insbesondere Phenolcarbonsäurederivaten) bei Verwendung einer Natriumchloridkonzentration von 3 bis 20 Gew.-%, besonders vorteilhaft von 10 bis 14 Gew.-%, um bis zu 90% reduziert werden.

Alternativ können bei jedem Verfahrensschritt anstelle von Kochsalz andere Salze zugegeben werden, wobei die Ionenstärke mit der der jeweiligen, oben genannten Kochsalzlösungen vergleichbar sein sollte.

Anstelle von Sonnenblumensamen können selbstverständlich auch andere phenolhaltige Rohstoffe eingesetzt werden, beispielsweise Raps, Lupine.

Zusammenfassend zeigt das beschriebene, nichterfindungsgemäße Verfahren der Phenolabreicherung bei der Extraktion von Proteinen mehrere Schritte, durch die der Phenolgehalt im Proteinextrakt gesenkt wird:
- Verringerung der Koextraktion phenolischer Verbindungen durch einen erhöhten Salzgehalt im Extraktionsmittel;
- Verringerung der Oxidation dennoch koextrahierter phenolischer Verbindung, und damit Vermeidung der irreversiblen Anlagerung der phenolischen Verbindung an die Proteine, bereits durch den erhöhten Salzgehalt;
- weitere Verringerung der Oxidation dennoch koextrahierter phenolischer Verbindungen, und damit Vermeidung der irreversiblen Anlagerung der phenolischen Verbindung an die Proteine, durch entsprechende Einstellung eines pH-Wertes <8,5, vorzugsweise jedoch <7,0, insbesondere bevorzugt <6,3;
- Abtrennung der nicht-oxidierten, im Extraktionsmittel gelösten, phenolischen Verbindungen mit physikalischen Methoden, bspw. mechanische Abtrennung oder Adsorption.

Ein Proteinpräparat, das aus einem auf diese Weise hergestellten, phenolarmen Proteinextrakt hergestellt wird, weist eine sehr geringe Konzentration an bitter schmeckenden, phenolischen Verbindungen auf und hat daher einen besonders neutralen Geschmack. Es kann daher auch aus phenolreichen Rohstoffen gewonnen werden und trotzdem in hohen Konzentrationen in unterschiedliche Lebensmittel eingearbeitet werden.

### Ausführungsbeispiel

Im Folgenden wird ein nicht von der Erfindung umfasstes, einfaches Ausführungsbeispiel für die Herstellung eines Produktes beschrieben:
1) Einrühren von zerkleinertem, proteinhaltigem pflanzlichen Rohstoff (z.B. Lupinenflakes oder Lupinenmehl) in H₂O mit einem Salzgehalt von 2 Gew.-% NaCl bei einer Temperatur von 40°C. Verhältnis pflanzlicher Rohstoff zu Extraktionsmittel 1:10.
2) Einstellen des pH-Wertes auf 6,8; Rühren bei 100 RPM für 20 Minuten bei 40 °C
3) Zentrifugation für 5 Minuten bei 20000 g
4) Verwerfen des Präzipitats (Niederschlag, Bodensatz)
5) Überführen des Extraktes (40 °C) mit einer Schlauchpumpe durch Eindüsen in salzfreies Wasser (3 °C). Verhältnis Extrakt zu Salzfreies Wasser 1:3.
6) Bei 3°C präzipitieren lassen für 10 Stunden
7) Abziehen des klaren Überstandes
8) Zentrifugation des präzipitierten Bodensatzes für 5 Minuten bei 20000 g
9) Verwerfen des Überstandes
10) Präzipitat: Produkt

## Patentansprüche

1. Proteinpräparat bestehend aus Proteinpartikeln, die jeweils aus mehreren pflanzlichen Proteinmolekülen mit jeweils mindestens einem hydrophilen und mindestens einem hydrophoben Teil bestehen, die Proteinmoleküle derart aneinander gelagert sind, dass das Proteinpartikel eine überwiegend hydrophobe Oberfläche aufweist, und der Proteingehalt der Proteinpartikel > 75 Gew.-%, vorzugsweise > 85 Gew.-% der Trockenmasse beträgt, wobei das Proteinpräparat Öl enthält und einen Trockensubstanzgehalt von über 30 Gew.-% aufweist, und wobei der Ölgehalt im Präparat, bezogen auf den Trockensubstanzgehalt, Werte von 1 Gew.-% übersteigt.

2. Proteinpräparat nach Anspruch 1,
**dadurch gekennzeichnet, dass** die Proteinmoleküle der Proteinpartikel derart aneinander gelagert sind, dass die Proteinpartikel eine rundliche, insbesondere kugelige Gestalt aufweisen.

3. Proteinpräparat nach Anspruch 1 oder 2,
**dadurch gekennzeichnet, dass** die Proteinmoleküle der Proteinpartikel jeweils derart in Form einer Kugel aneinander gelagert sind, dass die hydrophilen Teile der Proteinmoleküle in ein Kugelinneres zeigen und die hydrophoben Molekülteile in die Außenseite ragen.

4. Proteinpräparat nach einem der Ansprüche 1 bis 3, **dadurch gekennzeichnet, dass** die Proteinpartikel Proteine aus Leguminosen, insbesondere aus Soja-, Ackerbohnen-, Erbsen- oder Lupinensamen, oder aus Ölsaaten sind.

5. Proteinpräparat nach einem der Ansprüche 1 bis 4, **dadurch gekennzeichnet, dass** der Ölgehalt im Präparat, bezogen auf den Trockensubstanzgehalt, zwischen 5 und 20 Gew.-% liegt.

6. Proteinpräparat nach einem der Ansprüche 1 bis 5, **dadurch gekennzeichnet, dass** das Öl zumindest teilweise als dünne Schicht an die hydrophobe Oberfläche der Proteinpartikel angelagert ist.

7. Proteinpräparat nach Anspruch 6,
**dadurch gekennzeichnet, dass** das Öl zumindest teilweise als Trennmittel zwischen den Proteinpartikeln fungiert.

8. Proteinpräparat nach einem der Ansprüche 1 bis 7, **dadurch gekennzeichnet, dass** das Öl einen Gehalt an ungesättigten Fettsäuren > 30 Gew.-% enthält.

9. Proteinpräparat nach einem der Ansprüche 1 bis 8, **dadurch gekennzeichnet, dass** die Proteinmoleküle und das Öl aus der gleichen Pflanze stammen.

10. Proteinpräparat nach einem der Ansprüche 1 bis 9, **dadurch gekennzeichnet, dass** lipophile Substanzen in das Proteinpräparat eingelagert sind.

11. Verwendung des Proteinpräparates nach einem der Ansprüche 1 bis 10 zur Herstellung einer feuchten Masse oder Suspension mit einem Wassergehalt von 50 bis 80 Gew.-%, die direkt in Lebensmittel eingearbeitet wird.

## Claims

1. Protein preparation consisting of protein particles, of which each protein particle consists of a plurality of plant protein molecules, each of which has at least one hydrophilic moiety and at least one hydrophobic moiety, which protein molecules are arranged adjacent to each other in such manner that the protein particle has a predominantly hydrophobic surface and the protein content of the protein particles constitutes >75 wt%, preferably >85 wt% of the dry mass, wherein the protein preparation contains oil and has a dry substance content greater than 30 wt%, and wherein the content of the oil in the preparation exceeds values of 1 wt% relating to the dry substance content.

2. Protein preparation according to claim 1,
**characterised in that** the protein molecules of the protein particles are arranged adjacent to each other in such manner that the protein particles have a rounded, particularly spherical shape.

3. Protein preparation according to claim 1 or 2,
**characterised in that** the protein molecules of the protein particles are arranged adjacent to each other in the form of a sphere in such manner that the hydrophilic moieties of the protein molecules face into an interior of the sphere and the hydrophobic moieties project towards the external side.

4. Protein preparation according to any one of claims 1 to 3,
**characterised in that** the protein particles are proteins of leguminous plants, particularly soya, broad bean, pea or lupin seeds or oil-bearing seeds.

5. Protein preparation according to any one of claims 1 to 4,
**characterised in that** the oil content in the preparation is between 5 and 20 wt% relating to the dry substance content.

6. Protein preparation according to any one of claims 1 to 5,
**characterised in that** at least a part of the oil is deposited as a thin film on the hydrophobic surface of the protein particles.

7. Protein preparation according to claim 6,
**characterised in that** the oil functions at least in part as a releasing agent between the protein particles.

8. Protein preparation according to any one of claims 1 to 7,
**characterised in that** the oil has a content of >30 wt% unsaturated fatty acids.

9. Protein preparation according to any one of claims 1 to 8,
**characterised in that** the protein molecules and the oil originate from the same plant.

10. Protein preparation according to any one of claims 1 to 9,
**characterised in that** lipophilic substances are embedded in the protein preparation.

11. Use of the protein preparation according to any one of claims 1 to 10 to produce a damp mass or suspension having a water content from 50 to 80 wt% which is incorporated directly in food.

## Revendications

1. Préparation de protéines constituée de particules de protéines, qui sont constituées respectivement de plusieurs molécules de protéines végétales avec respectivement au moins une partie hydrophile et au moins une partie hydrophobe, les molécules de protéines sont positionnées les unes sur les autres de telle sorte que la particule de protéine présente une surface essentiellement hydrophobe, et la teneur en protéine de la particule de protéine s'élève à > 75% en poids, de préférence 85% en poids de la masse sèche, dans laquelle la préparation de protéines contient de l'huile et présente une teneur de substance sèche de plus de 30% en poids, et dans laquelle la teneur en huile dans la préparation, rapportée à la teneur de substance sèche, dépasse les valeurs par 1% en poids.

2. Préparation de protéines selon la revendication 1,
**caractérisée en ce que** les molécules de protéines de la particule de protéine sont positionnées l'une sur l'autre de telle sorte que les particules de protéine présentent une forme arrondie, notamment sphérique.

3. Préparation de protéines selon la revendication 1 ou 2,
**caractérisée en ce que** les molécules de protéine de la particule de protéine sont respectivement positionnées l'une sur l'autre en forme de sphère de telle sorte que les parties hydrophiles des molécules de protéines soient dirigées vers l'intérieur d'une sphère et les parties de molécule hydrophobes dépassent dans le côté extérieur.

4. Préparation de protéines selon une des revendications 1 à 3,
**caractérisée en ce que** les particules de protéines sont des protéines issues de légumineuses, notamment de semences de soja, féverole, pois ou lupin, ou issues d'oléagineux.

5. Préparation de protéines selon une des revendications 1 à 4,
**caractérisée en ce que** la teneur en huile dans la préparation, rapportée à la teneur de substance sèche, est comprise entre 5 et 20% en poids.

6. Préparation de protéines selon une des revendications 1 à 5,
**caractérisée en ce que** l'huile est accumulée au moins partiellement comme une couche mince sur la surface hydrophobe de la particule de protéine.

7. Préparation de protéines selon la revendication 6,
**caractérisée en ce que** l'huile agit au moins partiellement comme un agent de séparation entre les particules de protéines.

8. Préparation de protéines selon une des revendications 1 à 7,
**caractérisée en ce que** l'huile contient une teneur en acides gras insaturés > 30% en poids.

9. Préparation de protéines selon une des revendications 1 à 8,
**caractérisée en ce que** les molécules de protéines et l'huile proviennent de la même plante.

10. Préparation de protéines selon une des revendications 1 à 9,
**caractérisée en ce que** des substances lipophiles sont emmagasinées dans la préparation de protéines.

11. Utilisation de la préparation de protéines selon une des revendications 1 à 10 pour produire une masse humide ou une suspension avec une teneur en eau de 50 à 80% en poids, qui est injectée directement dans une denrée alimentaire.
